# FASCICULE DE BREVET EUROPEEN

(11) **EP 1 085 232 B1**
(45) Date de publication et mention de la délivrance du brevet: **30.06.2004**
(21) Numéro de dépôt: 99402243.2
(22) Date de dépôt: 13.09.1999
(51) Int. Cl.: F16F 9/44, F16F 9/32

(54) **Dispositif de réglage d'amortisseur à huile**
Einstellvorrichtung eines hydraulischen Stossdämpfers
Adjustment device for a hydraulic shock absorber

(43) Date de publication de la demande: 21.03.2001
(73) Titulaire: Amortisseur Donerre, 82000 Montauban (FR)
(72) Inventeur: De Frenne, Pierre, 82000 Montauban (FR)
(74) Mandataire: Debay, Yves

(56) Documents cités:
- EP-A- 0 601 982
- EP-A- 0 882 907
- EP-A- 0 893 618
- WO-A-98/03361
- WO-A-99/27273
- DE-C- 19 724 328
- FR-A- 2 581 726
- JP-A- 8 247 201
- JP-A- 8 270 713
- US-A- 4 732 244

## Description

La présente invention concerne un dispositif de réglage d'amortisseur à huile utilisable sur tout type de véhicule et notamment des véhicules tout terrain.

Il est connu, par la demande de brevet européen EP 0 237 085, un amortisseur à huile comportant un dispositif de réglage monté entre le corps de l'amortisseur et un réservoir d'huile monobloc connecté à la partie supérieure du cylindre formant l'amortisseur. Le dispositif de réglage de l'amortisseur est situé sur la jonction entre le réservoir et l'amortisseur et permet, sans démontage de l'amortisseur, de régler la force de compression de l'amortisseur par l'intermédiaire de deux molettes. Les actions sur les molettes permettent de régler la détente et la compression de l'amortisseur. Cependant, ce dispositif ne permet pas d'effectuer un réglable différencié pour les basses et hautes vitesses de déplacement du piston de l'amortisseur. De plus, ce dispositif met en communication soit le piston, soit le réservoir par deux canalisations avec les moyens de réglage. Ce dispositif comprend également de nombreuses pièces et son montage est difficile.

Il est également connu par la demande de brevet internationale WO 98/03361 déposée par la requérante, un système d'amortisseur à huile comprenant un amortisseur et un réservoir connectés par l'intermédiaire d'un tuyau à la partie supérieure du cylindre dans lequel est placé le piston de l'amortisseur. Le système comprend des moyens de réglage de l'amortisseur pour les basses et hautes vitesses, situés sur le réservoir. Cependant, ce dispositif comporte beaucoup de pièces et nécessite un démontage du réservoir pour le réglage de l'amortisseur pour les hautes vitesses.

La présente invention a donc pour objet de pallier les inconvénients de l'art antérieur en proposant un dispositif de réglage, de conception simple, permettant un réglage différencié de l'amortisseur pour les basses vitesses et les hautes vitesses de déplacement du piston, ce réglage s'effectuant sans démontage de l'amortisseur et sans l'aide d'outils spécifiques.

Ce but est atteint par le fait que le dispositif selon l'invention comprend une tête monobloc destinée à recevoir de manière amovible, d'une part un cylindre contenant le piston d'amortisseur et d'autre part, un réservoir à huile et des moyens de réglage basses vitesses et des moyens de réglage hautes vitesses de déplacement du piston de l'amortisseur, la tête monobloc comportant un canal permettant la circulation de l'huile entre l'amortisseur et le réservoir, dans lequel les moyens de réglage basses vitesses et les moyens de réglage hautes vitesses sont montés de façon que leurs axes de symétrie soient coaxiaux avec le canal.

Selon une autre particularité, les moyens de réglage basses et hautes vitesses sont montés dans la tête monobloc, par l'intermédiaire d'une cavité sur le canal, de sorte qu'ils définissent deux trajets différents pour le passage de l'huile de l'amortisseur au réservoir, en fonction de la vitesse de déplacement du piston de l'amortisseur, un premier trajet étant utilisé par l'huile lors des basses vitesses et un second trajet lors des hautes vitesses.

Selon une autre particularité, les moyens de réglage hautes vitesses de l'amortisseur comprennent, d'une part une valve de compression montée de façon coulissante et coaxiale sur une première extrémité d'une première vis montée de façon réglable dans le canal et, d'autre part, des moyens élastiques montés sur la première vis et exerçant une pression déterminée sur la valve de compression lorsqu'elle est montée sur la première vis, de sorte que la valve de compression tend à s'écarter de la première vis, pour définir le deuxième trajet de l'huile en fonction de la pression d'huile exercée sur la valve de compression.

Selon une autre particularité, les moyens de réglage basses vitesses de l'amortisseur comprennent, d'une part une deuxième vis comprenant un pointeau de forme déterminée, montée de façon réglable dans un perçage coaxial de la première vis, ce perçage comprenant une première section de dimensions déterminées supérieures aux dimensions de la deuxième vis, une deuxième section de dimensions déterminées inférieures aux dimensions de la deuxième vis, ces deux sections étant jointes par une troisième section de forme déterminée, complémentaire à la forme du pointeau de la deuxième vis et d'autre part, des moyens d'évacuation de l'huile vers le réservoir, réalisés sur la valve de compression et la première vis, pour définir le ***premier*** trajet.

Selon une autre particularité, les moyens élastiques sont constitués de rondelles Belle-ville montées en opposition.

Selon une autre particularité, la valve de compression est constituée d'un cylindre creux comportant deux couronnes entre lesquelles est réalisé au moins un orifice radial constituant des moyens d'évacuation de l'huile vers le réservoir.

Selon une autre particularité, la première vis est constituée d'un cylindre creux comportant sur sa première extrémité au moins un orifice radial, constituant des moyens d'évacuation de l'huile vers le réservoir et sur sa surface extérieure, un filetage permettant de régler la pression des moyens élastiques sur la valve de compression.

Selon une autre particularité, la première et la deuxième vis comprennent des moyens de repérage du réglage de l'amortisseur comprenant d'une part sur la surface extérieure de la deuxième vis au moins une encoche parallèle à son axe de symétrie, et d'autre part sur la première vis une lumière radiale dans laquelle sont montés une bille et un moyen élastique, de sorte que la bille vient coopérer avec une encoche de la deuxième vis.

Selon une autre particularité, la forme du pointeau de la deuxième vis et de la troisième section du perçage de la première vis est constituée par un tronc de cône.

Selon une autre particularité, la première et la deuxième vis comportent des moyens permettant leur réglage par l'intermédiaire d'outils classiques, tels qu'une clé et/ou un tournevis.

Selon une autre particularité, la surface extérieure de la valve de compression comporte au moins une encoche parallèle à son axe de symétrie.

Selon une autre particularité, des moyens de purge sont situés sur la tête monobloc à la verticale de la zone de fixation du réservoir et débouchent par une cavité, dans le canal.

D'autres particularités et avantages de la présente invention apparaîtront plus clairement à la lecture de la description ci-après faite en référence aux dessins annexés dans lesquels :
- la figure 1 représente une vue en perspective éclatée du dispositif selon l'invention,
- la figure 2 représente une vue en coupe de la tête monobloc,
- les figures 3 et 4 représentent respectivement une vue en coupe et une vue de côté de la valve de compression,
- les figures 5 et 6 représentent respectivement une vue en coupe et une vue en perspective de la première vis
- la figure 7 représente une vue de côté de la deuxième vis.

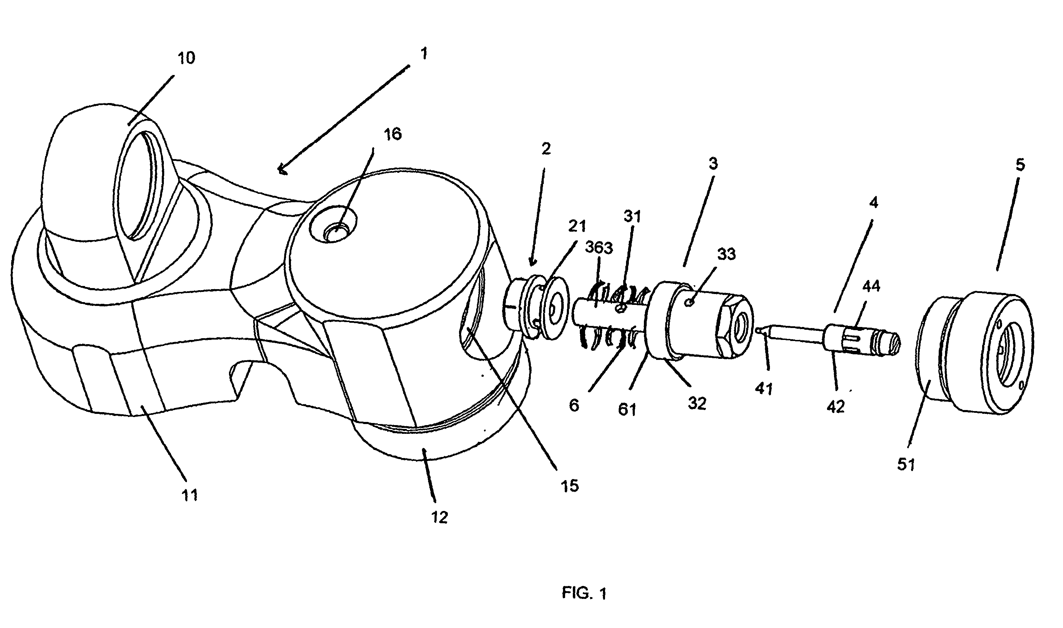

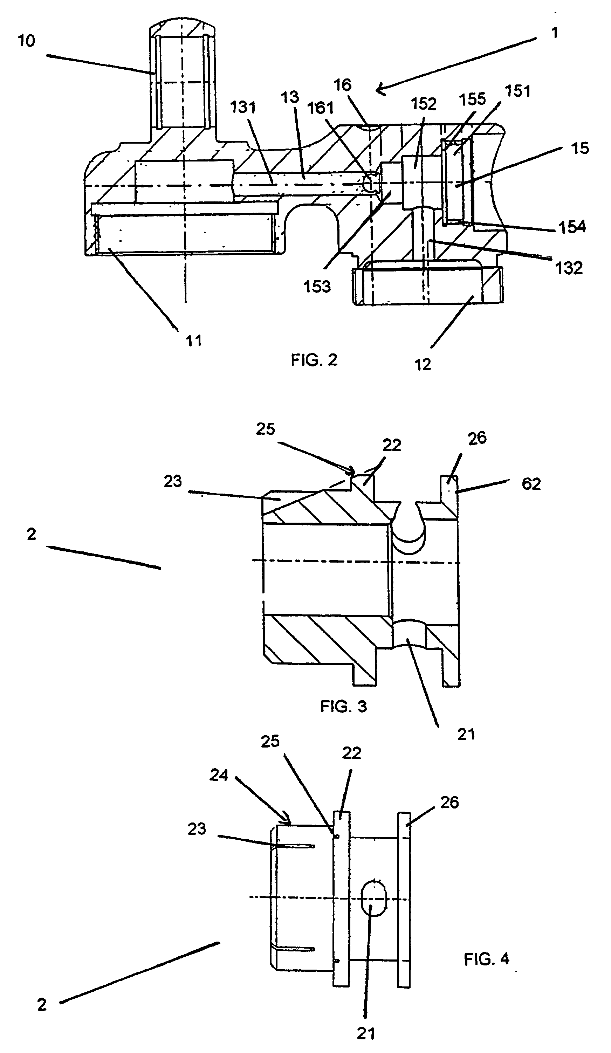

La figure 1 représente une vue en perspective éclatée du dispositif selon l'invention. Le dispositif de réglage d'amortisseur à huile selon l'invention comprend une tête monobloc (1), comportant des moyens de montage (11) d'un cylindre d'amortisseur (non représenté), un moyen (10) de montage, par exemple de type oeillet sur un véhicule et des moyens (12) de fixation d'un réservoir à huile (non représenté). L'amortisseur utilisable avec le dispositif est un amortisseur à huile classique comprenant, notamment, un corps creux cylindrique et un piston délimitant, à l'intérieur du cylindre, deux volumes de travail. A titre d'exemple non limitatif, l'amortisseur utilisé est celui décrit dans la demande de brevet internationale de brevet WO 98/03361 déposée par la requérante. Le réservoir est de type connu, par exemple du type de celui décrit dans cette demande de brevet internationale et exerce les mêmes fonctions. Le transit de l'huile, du cylindre de l'amortisseur au réservoir, est assuré par un canal (13, fig. 2) qui sera décrit ultérieurement. Le dispositif selon l'invention comprend également des moyens (2, 3, 6) de réglage de l'amortisseur pour les hautes vitesses du piston et des moyens (2, 3, 4, 21, 31) de réglage pour les basses vitesses du piston. Les moyens (2, 3, 6) de réglage hautes vitesses comprennent une valve (2) de compression montée coulissante sur un manchon cylindrique (363) d'une première vis (3) et des moyens (6) élastiques, constitués par exemple de rondelles Belle-ville, montées également sur le manchon (363) cylindrique et contre un épaulement (61) de la première vis (3) pour exercer de l'autre côté une pression déterminée sur la valve (2), de sorte que la valve (2) de compression tend à s'écarter de la première vis (3). Les moyens (2, 3, 4, 21, 31) de réglage basses vitesses comprennent, d'une part une deuxième vis (4) comprenant un pointeau (41) de forme déterminée montée de façon réglable dans un perçage (35) de la première vis (3) et d'autre part, des moyens (21, 31) d'évacuation de l'huile vers le réservoir, réalisés sur la valve (2) de compression et sur la première vis. Ces moyens (2, 3, 4, 6, 21, 31) de réglage des hautes et basses vitesses sont montés dans une cavité (15) de la tête (1) monobloc, par l'intermédiaire d'un écrou (5) de solidarisation, de sorte que leurs axes de symétrie soient confondus avec l'axe de symétrie du canal (13, fig. 2). L'écrou (5) est monté dans la tête (1) monobloc par l'intermédiaire d'un filetage (51) de l'écrou (5) collaborant avec un taraudage (154, fig. 2) de la tête (1) monobloc. Le montage des moyens (2, 3, 4, 6) de réglage de l'amortisseur est assuré par un filetage (32) de la première vis (3) collaborant avec un taraudage (non représenté) de l'écrou (5). Ce taraudage (non représenté) assure également le réglage de la première vis (3). De plus, l'écrou (5) garantit l'étanchéité du montage. Avantageusement, le dispositif selon l'invention comprend des moyens (16) de purge situés sur une zone de la tête (1) monobloc située à la verticale des moyens (12) de montage d'un réservoir.

La figure 2 représente une vue en coupe de la tête monobloc. La tête (1) monobloc comprend une cavité (15) formée d'une pluralité de tronçons (151, 152, 153) cylindriques dans laquelle sont montés les moyens (2, 3, 4, 6) de réglage hautes et basses vitesses. Un premier tronçon (151), situé le plus proche de l'extérieur de la tête (1) monobloc, est destiné à recevoir l'écrou (5) de solidarisation, par l'intermédiaire d'un taraudage (154) collaborant avec le filetage (51, fig. 1) situé sur la surface extérieure de l'écrou (5) de solidarisation. Un deuxième tronçon (152) adjacent au premier (151), comporte un orifice dans lequel débouche une section (132) verticale du canal (13) reliant le cylindre de l'amortisseur (non représenté) et le réservoir (non représenté). Les premier et deuxième tronçons (151, 152) sont séparés par une gorge (155) destinée à recevoir un joint d'étanchéité. Un troisième tronçon (153) adjacent au deuxième (152) est coaxial à une section (131) horizontale du canal (13) débouchant dans la partie supérieure du cylindre (non représenté) de l'amortisseur. Les moyens (16) de purge débouchent dans une cavité (161) située à l'extrémité du troisième tronçon (153), dans la section (131) horizontale du canal (13).

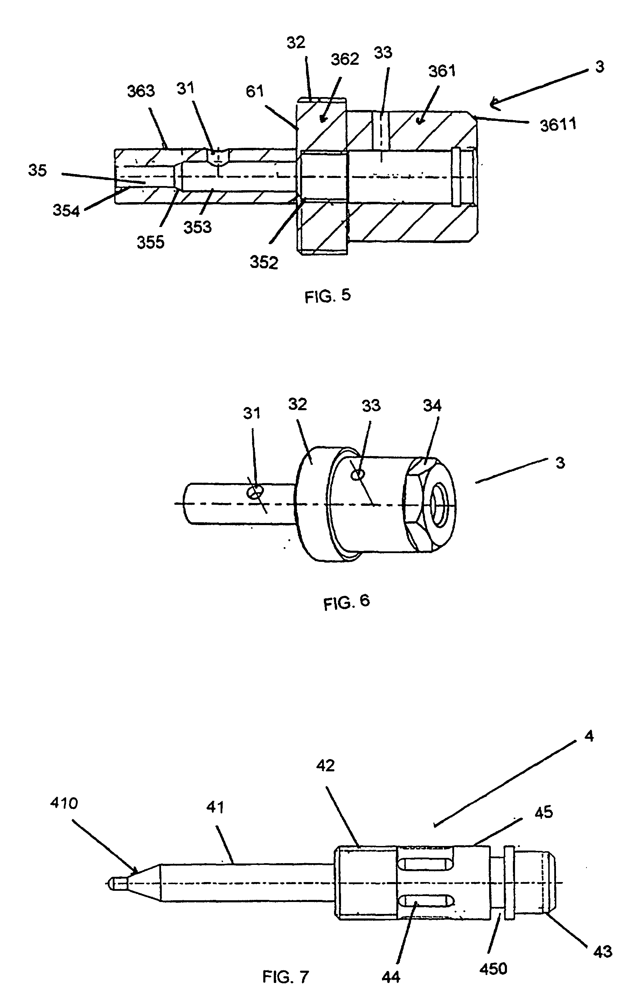

Les figures 3 et 4 représentent respectivement une vue en coupe et une vue de face de la valve de compression. La valve (2) de compression est constituée d'un cylindre creux comportant deux couronnes (22, 26) parallèles. Au moins un orifice (21) radial, constituant des moyens d'évacuation de l'huile vers le réservoir, débouche entre les deux couronnes (22, 26), reliant ainsi l'intérieur de la valve (2) de compression à l'extérieur. Ce ou ces orifices (21) interviennent dans le processus, décrit ultérieurement, d'évacuation de l'huile pour les basses vitesses du piston de l'amortisseur. Avantageusement, la surface (24) extérieure de la valve (2) de compression adjacente à l'une (22) des deux couronnes (22, 26) comprend au moins une encoche (23) parallèle à l'axe de symétrie de la valve (2), et de forme déterminée, par exemple en forme de biseau, cette ou ces encoches (23) pouvant se prolonger sur la couronne adjacente (22) par une encoche (25), par exemple en forme de biseau. Cette ou ces encoches (23, 25) permettent d'obtenir une progressivité de l'ouverture du passage formé d'une part par le troisième tronçon (153, fig. 2) de la cavité (15, fig. 2) adjacent au canal (13), dont le diamètre intérieur correspond au diamètre extérieur de la partie (24) cylindrique, et d'autre part parle deuxième tronçon (152) qui débouche par la section (132) verticale du canal (13) dans le réservoir, la zone de la valve (2) de compression comprise entre les deux couronnes (22, 26) étant située en vis à vis de cette section (132) verticale. Ceci permet une progressivité de l'amortissement du piston de l'amortisseur pour les hautes vitesses.

Les figures 5 et 6 représentent respectivement une vue en coupe et une vue en perspective de la première vis. La première vis (3), dite vis de réglage haute vitesse, est constituée d'une pluralité de cylindres (361, 362, 363) creux de diamètres différents formant un perçage (35) coaxial. Ce perçage est destiné à recevoir la deuxième vis (4, fig. 1 et 7) décrite ultérieurement. Un premier cylindre (361) constituant l'extrémité libre de la première vis (3), situé vers l'extérieur de la tête (1 fig. 1 et 2) monobloc comprend des moyens (3611) permettant, par l'intermédiaire d'un outil classique, de type clé, de faire tourner la première vis (3). Avantageusement, ce premier cylindre (361) comprend une première lumière (33) radiale destinée à recevoir des moyens (non représentés) de repérage du réglage de la deuxième vis (4 fig. 1). Ces moyens comprennent par exemple une bille montée sur un moyen élastique, de type ressort, et maintenu par une vis pour exercer une force de poussée de la bille, dirigée vers l'axe du premier tronçon (361). Un deuxième cylindre (362) comprend sur sa surface extérieure un filetage (32) destiné à collaborer avec un taraudage de l'écrou (5 fig. 1) de solidarisation des moyens (2, 3, 4, 6, fig. 1) de réglage, d'une part pour assurer le montage de la deuxième vis (3) sur l'écrou (5) et d'autre part, pour régler la première vis (3). La surface (61) plane du deuxième cylindre (362) située à l'opposé du premier cylindre (361) constitue l'épaulement (61) sur lequel viennent prendre appui les rondelles (6, fig.1) Belle-ville. La deuxième surface d'appui des rondelles (6) est constituée par la surface (62, fig. 3) extérieure de la couronne (26, fig. 3) de la valve (2) de compression non adjacente à la surface (24, fig.3) cylindrique. Le deuxième cylindre (362) comprend également sur la surface intérieure du perçage (35) correspondante, un taraudage (352) collaborant avec un filetage (42, fig. 7) de la deuxième vis (4) pour assurer le montage de la deuxième vis (4, fig. 3) dans la tête (1) monobloc et son réglage. Un troisième tronçon (363) constituant le manchon cylindrique, sur lequel sont montées les rondelles (6 fig. 1) et la valve (2, fig. 1) de compression, comprend également au moins un orifice (31) radial débouchant dans le perçage (35) du troisième tronçon (363). Ce perçage (35) comporte deux sections (353, 354) de dimensions déterminées. Une première section (353) de diamètre intérieur supérieur au diamètre extérieur de la deuxième vis (4, fig. 1 et 7) et une deuxième section (354) de diamètre intérieur inférieur au diamètre extérieur de la deuxième vis (4, fig. 1 et 7). Ces deux sections (353, 354) sont reliées par une troisième section (355) de forme déterminée, complémentaire en forme de pointeau (410, fig. 1 et 7) réalisé à l'extrémité de la deuxième vis (4, fig. 7).

La figure 7 représente une vue de face de la deuxième vis. La deuxième vis (4) est constituée de deux sections (41, 45) cylindriques jointes. Une première section (45) comprend sur son extrémité libre une tête de vis (43) ou un moyen équivalent permettant, grâce à un outil classique, de faire tourner la deuxième vis (4). Cette section (45) comprend également un filetage (42) collaborant lors du montage des moyens (2, 3, 4, 6, fig. 1) de réglage avec le taraudage (352, fig. 5) de la première vis (3, fig. 1 et 5). Avantageusement, la première section (45) cylindrique comprend au moins une encoche (44), parallèle à l'axe de symétrie de la deuxième vis, collaborant avec la bille des moyens (non représentés) de repérage du réglage de la deuxième vis (4) montés dans la lumière (33, fig. 5) de la première vis (3, fig. 5). La deuxième section (41) comprend sur son extrémité libre un pointeau (410) de forme déterminée, par exemple, un tronc de cône. Cette forme particulière est réalisée également sur troisième section (351, fig. 5) de la première vis (3, fig. 1 et 5). Toute autre forme ellipsoïdale, sphérique ou autre peut remplacer le tronc de cône. Une gorge (450) disposée entre les rainures (44) et la tête de vis (43) permet de recevoir un joint d'étanchéité.

Le principe de fonctionnement du dispositif de réglage selon l'invention va à présent être expliqué en référence à l'ensemble des figures. Lorsque les moyens (2, 3, 4, 6) de réglage et les moyens (5) de solidarisation desdits moyens (2, 3, 4, 6) sont montés dans la tête (1) monobloc, la valve (2) de compression est située entre le troisième tronçon (153) et le deuxième tronçon (152) de la cavité (15) cylindrique de la tête (1) monobloc. La première vis (3) se visse sur le filetage (154) du premier tronçon (151) de cette même tête (1) monobloc. La deuxième vis (4) est vissée par son filetage (42) dans le taraudage (352) de la première vis (3), afin de ménager, entre le pointeau (410) et la troisième section (355) du perçage (35) de la première vis (3), l'espace souhaité pour la réponse voulue aux basses vitesses du piston de l'amortisseur. Les moyens (5) de solidarisation assurent également l'étanchéité du dispositif. Dans la configuration de repos, les moyens (6) élastiques exercent une pression déterminée sur la valve (2) de compression, de sorte que le rebord annulaire (22) adjacent au cylindre (24) de la valve (2) de compression vienne en appui contre l'épaulement formé entre le troisième tronçon (153) et le deuxième tronçon (152) de la tête (1) monobloc. Ainsi, les moyens (2, 3, 4, 6) de réglage sont montés sur le canal (13) entre la section (131) horizontale et la section (132) verticale. Ils définissent alors deux trajets différents pour le transit de l'huile allant de l'amortisseur au réservoir. Ces deux trajets dépendent de la vitesse de déplacement du piston dans l'amortisseur.

Lorsque le piston de l'amortisseur se déplace à basse vitesse, il chasse l'huile vers le réservoir qui passe dans le perçage (35) de la première vis (3). L'huile s'écoule alors dans l'intervalle formé par le pointeau (410) et la troisième section (355) de la première vis, puis par chaque orifice (31) radial de la première vis (3), ensuite par chaque orifice (21) radial de la valve (2) de compression et enfin dans la section (132) verticale du canal (13). Lorsque le piston de l'amortisseur se déplace à haute vitesse, le débit d'huile devient important, l'intervalle formé par le pointeau (410) et la troisième section (355) est alors saturé. L'huile exerce alors une pression sur la valve (2) de compression. La valve (2) de compression va alors coulisser sur le troisième tronçon (363) de la première vis (3) en comprimant les rondelles (6) élastiques. Lorsque la compression des rondelles (6) élastiques atteint une valeur déterminée, la position de la valve (2) de compression permet à l'huile de passer dans le réservoir par un intervalle délimité par les encoches (23) formées dans la surface extérieure (24) de la valve (2) de compression et l'épaulement entre le deuxième et troisième tronçons (152, 153) de la cavité (15) et le rebord annulaire (22) se trouvant en vis-à- vis de la section (132) verticale du canal (13). Dès que la pression de l'huile exercée sur la valve (2) de compression diminue, celle-ci reprend sa position initiale grâce à la pression des moyens (6) élastiques. Avantageusement, les encoches (23) pratiquées sur la surface (24) extérieure de la valve (2) de compression et les encoches (25) pratiquées sur la couronne (22) de la valve (2) permettent d'obtenir une progressivité dans le déplacement d'huile vers le réservoir. En effet, grâce à ces encoches (23, 25), l'huile commence à passer dans le réservoir, par l'intervalle formé par la valve (2) de compression et les formes de la cavité (15) cylindrique de la tête (1) monobloc, avant le déplacement maximal de la valve (2) de compression.

Le réglage de l'amortisseur s'effectue en agissant soit sur la première vis (3), pour le réglage haute vitesse de l'amortisseur, soit sur la deuxième vis (4), pour le réglage basse vitesse de l'amortisseur. En effet, lorsque l'utilisateur agit sur la première vis (3), il modifie la pression exercée par les moyens (6) élastiques sur la valve (2) de compression, modifiant alors la pression d'huile nécessaire pour déplacer la valve (2) de compression. Lorsque l'utilisateur agit sur la deuxième vis (4), il modifie l'intervalle entre le pointeau (410) et la troisième section (351) du perçage (35) de la première vis (3), modifiant alors le débit d'huile maximum de cet intervalle.

On conçoit que le dispositif selon l'invention est de conception et de montage simples puisqu'il n'est constitué que de quelques pièces (5 sans les moyens élastiques de forme standard). De plus, ce dispositif permet le réglage de l'amortisseur pour les basses et hautes vitesses du piston par l'intermédiaire d'outils classiques, tels que par exemple, un tournevis et une clé, sans démontage de l'amortisseur.

Il est clair que d'autres modifications à la portée de l'homme du métier entrent dans le cadre de l'invention.

## Revendications

1. Dispositif de réglage d'amortisseur à huile **caractérisé en ce qu'**il comprend une tête (1) monobloc destinée à recevoir de manière amovible, un cylindre d'amortisseur, un réservoir à huile, des moyens (2, 3, 6) de réglage hautes vitesses du piston de l'amortisseur et des moyens (2, 3, 4) de réglages basses vitesses, la tête (1) monobloc comportant un canal (13) permettant la circulation de l'huile entre l'amortisseur et le réservoir dans lequel les moyens (2, 3, 6) de réglage hautes vitesses et les moyens (2, 3, 4) de réglage basses vitesses sont montés, de façon que leurs axes de symétrie soient coaxiaux avec le canal.

2. Dispositif de réglage d'amortisseur à huile selon la revendication 1, **caractérisé en ce que** les moyens (2, 3, 4, 6) de réglage sont montés dans la tête monobloc, par l'intermédiaire d'une cavité (15), sur le canal (13), de sorte que les moyens (2, 3, 4, 60) de réglage définissent deux trajets différents, pour le passage de l'huile de l'amortisseur au réservoir, en fonction de la vitesse de déplacement du piston de l'amortisseur, un premier trajet étant utilisé par l'huile lors des basses vitesses et un second trajet lors des hautes vitesses.

3. Dispositif de réglage d'amortisseur à huile selon la revendication 2, **caractérisé en ce que** les moyens (2, 3, 6) de réglage hautes vitesses de l'amortisseur comprennent, d'une part une valve (2) de compression montée de façon coulissante et coaxiale sur une première extrémité d'une première vis (3), montée de façon réglable dans le canal (13), et d'autre part, des moyens (6) élastiques montés sur la première vis (3) et exerçant une pression déterminée sur la valve (2) de compression lorsqu'elle est montée sur la première vis (3), de sorte que la valve (2) de compression tend à s'écarter de la première vis (3), pour définir le deuxième trajet de l'huile en fonction de la pression d'huile exercée sur la valve (2) de compression.

4. Dispositif de réglage d'amortisseur à huile selon la revendication 3, **caractérisé en ce que** les moyens (2, 3, 4) de réglage basses vitesses de l'amortisseur comprennent, d'une part une deuxième vis (4) comprenant un pointeau (41) de forme déterminée, montée de façon réglable dans un perçage (35) coaxial de la première vis (3), ce perçage (35) comprenant une première section (353) de dimensions déterminées supérieures aux dimensions de la deuxième vis (4), une deuxième section (354) de dimensions déterminées inférieures aux dimensions de la deuxième vis (4), ces deux sections (353, 354) étant jointes par une troisième section (355) de forme déterminée, complémentaire à la forme du pointeau (410) de la deuxième vis (4) et d'autre part, des moyens (21, 31) d'évacuation de l'huile vers le réservoir, réalisés sur la valve (2) de compression et la première vis (3), pour définir le ***premier*** trajet.

5. Dispositif de réglage d'amortisseur à huile selon la revendication 3, **caractérisé en ce que** les moyens (6) élastiques sont constitués de rondelles Belle-ville montées en opposition.

6. Dispositif de réglage d'amortisseur à huile selon l'une des revendications 3 à 5, **caractérisé en ce que** la valve (1) de compression est constituée d'un cylindre creux comportant deux couronnes (22, 26) entre lesquelles est pratiqué au moins un orifice (21) radial constituant des moyens d'évacuation de l'huile vers le réservoir.

7. Dispositif de réglage d'amortisseur à huile selon l'une des revendications 3 à 6, **caractérisé en ce que** la première vis (3) est constituée d'un cylindre creux comportant sur sa première extrémité au moins un orifice (31) radial constituant des moyens (31) d'évacuation de l'huile vers le réservoir et sur sa surface extérieure, un filetage (32) permettant de régler la pression des moyens (6) élastiques sur la valve (2) de compression.

8. Dispositif de réglage d'amortisseur à huile selon l'une des revendications 4 à 7, **caractérisé en ce que** la première (3) et deuxième vis (4) comprennent des moyens de repérage du réglage de l'amortisseur, comprenant, d'une part sur la surface extérieure de la deuxième vis (4) au moins une encoche (44) parallèle à son axe de symétrie et d'autre part, sur la première vis (3) une lumière (33) radiale dans laquelle sont montés une bille et un moyen élastique, de sorte que la bille vient coopérer avec une encoche (44) de la deuxième vis (4).

9. Dispositif de réglage d'amortisseur à huile selon l'une des revendications 2 à 8 **caractérisé en ce que** la forme du pointeau (410) de la deuxième vis (4) et de la troisième section (355) de la première vis (3) est constituée par un tronc de cône.

10. Dispositif de réglage d'amortisseur à huile selon l'une des revendications 2 à 9 **caractérisé en ce que** la première (3) et la deuxième vis (4) comportent des moyens (43, 3611) permettant leur réglage par l'intermédiaire d'outils classiques tels qu'une clé et/ou un tournevis.

11. Dispositif de réglage d'amortisseur à huile selon l'une des revendications 3 à 10, **caractérisé en ce que** la surface (24) extérieure de la valve (2) de compression comporte au moins une encoche (23) parallèle à son axe de symétrie.

12. Dispositif de réglage d'amortisseur à huile selon l'une des revendications 1 à 11, **caractérisé en ce que** des moyens (16) de purge sont situés sur la tête (1) monobloc à la verticale de la zone de fixation du réservoir et débouchent, par une cavité (161), dans le canal (13).

## Patentansprüche

1. Einstellvorrichtung eines hydraulischen Stoßdämpfers,
**dadurch gekennzeichnet, dass** er enthält:
einen einstückigen Kopf (1), dazu bestimmt, in abnehmbarer Weise einen Stoßdämpferzylinder aufzunehmen,
ein Ölreservoir,
Einstellmittel (2, 3, 6) für hohe Geschwindigkeiten des Stoßdämpferkolbens und
Einstellmittel (2, 3, 4) für niedrige Geschwindigkeiten;
wobei der einstückige Kopf (1) einen Kanal (13) aufweist, der einen Ölumlauf zwischen dem Stoßdämpfer und dem Reservoir ermöglicht, in dem die Einstellmittel (2, 3, 6) für hohe Geschwindigkeiten und die Einstellmittel (2, 3, 4) für niedrige Geschwindigkeiten so angebracht sind, dass ihre Symmetrieachsen koaxial zu dem Kanal sind.

2. Einstellvörrichtung eines hydraulischen Stoßdämpfers nach Anspruch 1, **dadurch gekennzeichnet, dass**
die Einstellmittel (2, 3, 4, 6) in dem einstückigen Kopf (1) vermittels eines Hohlraums (15) auf dem Kanal (13) angebracht sind, so dass die Einstellmittel (2, 3, 4, 60) zwei verschiedene Wege für den Durchfluss des Öls von dem Stoßdämpfer zu dem Reservoir definieren als Funktion der Geschwindigkeit der Bewegung des Stoßdämpferkolbens, wobei ein erster Weg für das Öl bei niedrigen Geschwindigkeiten und ein zweiter Weg für das Öl bei hohen Geschwindigkeiten verwendet wird.

3. Einstellvorrichtung eines hydraulischen Stoßdämpfers nach Anspruch 2, **dadurch gekennzeichnet, dass**
die Einstellmittel (2, 3, 6) für hohe Geschwindigkeiten des Stoßdämpfers enthalten:
einerseits ein Druckventil (2), das auf gleitfähige Weise und koaxial auf einem ersten Endstück einer ersten Schraube (3) angebracht ist, die auf einstellbare Weise in dem Kanal (13) angebracht ist, und
andererseits elastische Mittel (6), die auf der ersten Schraube (3) angebracht sind und einen bestimmten Druck auf das Druckventil (2) ausüben, wenn es auf der ersten Schraube (3) angebracht ist,
so dass das Druckventil (2) dazu neigt, sich von der ersten Schraube (3) zu entfernen, um den zweiten Weg für das Öl als Funktion des auf das Druckventil (2) ausgeübten Öldrucks zu definieren.

4. Einstellvorrichtung eines hydraulischen Stoßdämpfers nach Anspruch 3, **dadurch gekennzeichnet, dass**
die Einstellmittel (2, 3, 4) für niedrige Geschwindigkeiten des Stoßdämpfers enthalten:
einerseits eine zweite Schraube (4) mit einer Nadel mit einer vorbestimmten Form, die in einstellbarer Weise in einer koaxialen Bohrung der ersten Schraube angebracht ist, wobei die Bohrung (35) einen ersten Abschnitt (353) mit vorbestimmten Abmessungen größer als die Abmessungen der zweiten Schraube (4) und einen zweiten Abschnitt (354) mit vorbestimmten Abmessungen kleiner als die Abmessungen der zweiten Schraube (4) enthält, wobei die zwei Abschnitte (353, 354) durch einen dritten Abschnitt (355) mit einer Form komplementär zu der Form der Nadel (410) der zweiten Schraube (4) verbunden sind, und
andererseits Mittel (21, 31) zum Ablassen des Öls zu dem Reservoir hin, die an dem Druckventil und an der ersten Schraube (3) verwirklicht sind, um den ersten Weg zu definieren.

5. Einstellvorrichtung eines hydraulischen Stoßdämpfers nach Anspruch 3, **dadurch gekennzeichnet, dass**
die elastischen Mittel (6) aus Belleville-Scheiben gebildet sind, die entgegengesetzt angebracht sind.

6. Einstellvorrichtung eines hydraulischen Stoßdämpfers nach einem der Ansprüche 3 bis 5, **dadurch gekennzeichnet, dass**
das Druckventil (1) aus einem Hohlzylinder gebildet ist, der zwei Kränze (22, 26) aufweist, zwischen denen zumindest eine radiale Öffnung (21) angebracht ist, die ein Mittel zum Ablassen des Öls zu dem Reservoir hin bildet.

7. Einstellvorrichtung eines hydraulischen Stoßdämpfers nach einem der Ansprüche 3 bis 6, **dadurch gekennzeichnet, dass**
die erste Schraube (3) aus einem Hohlzylinder gebildet ist, der auf seinem ersten Endstück zumindest eine radiale Öffnung (31) aufweist, die ein Mittel (31) zum Ablassen des Öls zu dem Reservoir hin bildet, sowie auf seiner äußeren Oberfläche ein Gewinde (32), das es ermöglicht, den Druck des elastischen Mittels (6) auf das Druckventil (2) einzustellen.

8. Einstellvorrichtung eines hydraulischen Stoßdämpfers nach einem der Ansprüche 4 bis 7, **dadurch gekennzeichnet, dass**
die erste (3) und die zweite Schraube (4) Mittel zur Bestimmung der Einstellung des Stoßdämpfers enthalten, die umfassen:
einerseits auf der äußeren Oberfläche der zweiten Schraube (4) zumindest eine Aussparung (44) parallel zu ihrer Symmetrieachse und
andererseits auf der ersten Schraube (3) eine radiale Öffnung (33), in der eine Kugel und ein elastisches Mittel so angebracht sind, dass die Kugel mit einer Aussparung (44) der zweiten Schraube (4) zusammenwirkt.

9. Einstellvorrichtung eines hydraulischen Stoßdämpfers nach einem der Ansprüche 2 bis 8, **dadurch gekennzeichnet, dass**
die Form der Nadel (410) der zweiten Schraube (4) und des dritten Abschnitts (355) der ersten Schraube (3) durch einen Kegelstumpf gegeben ist.

10. Einstellvorrichtung eines hydraulischen Stoßdämpfers nach einem der Ansprüche 2 bis 9, **dadurch gekennzeichnet, dass**
die erste (3) und die zweite Schraube (4) Mittel (43, 3611) enthalten, die ihr Einstellen mittels klassischer Werkzeuge wie eines Schlüssels oder eines Schraubendrehers ermöglicht.

11. Einstellvorrichtung eines hydraulischen Stoßdämpfers nach einem der Ansprüche 3 bis 10, **dadurch gekennzeichnet, dass**
die äußere Oberfläche (24) des Druckventils (2) zumindest eine Aussparung (23) parallel zu ihrer Symmetrieachse aufweist.

12. Einstellvorrichtung eines hydraulischen Stoßdämpfers nach einem der Ansprüche 1 bis 11, **dadurch gekennzeichnet, dass**
Ablassmittel (16) an dem einstückigen Kopf (1) vertikal zu der Zone der Befestigung des Reservoirs angeordnet sind und über einen Hohlraum (161) in dem Kanal münden.

## Claims

1. Adjustment device for a hydraulic shock absorber **characterised in that** it comprises a single-piece head (1) intended to receive in a removable manner a shock absorber cylinder, an oil reservoir, high-speed adjustment means (2, 3, 6) for the piston of the shock absorber and low-speed adjustment means (2, 3, 4), the single-piece head (1) comprising a channel (13) allowing the circulation of oil between the shock absorber and the reservoir in which the high-speed adjustment means (2, 3, 6) and the low-speed adjustment means (2, 3, 4) are mounted, so that their axes of symmetry are coaxial with the channel.

2. Adjustment device for a hydraulic shock absorber according to Claim 1, **characterised in that** the adjustment means (2, 3, 4, 6) are mounted in the single-piece head, via a cavity (15) on the channel (13), so that the adjustment means (2, 3, 4, 60) define two different paths for the passage of oil from the shock absorber to the reservoir, as a function of the displacement speed of the piston of the shock absorber; a first path being used by the oil at low speeds and a second path at high speeds.

3. Adjustment device for a hydraulic shock absorber according to Claim 2, **characterised in that** the high-speed adjustment means (2, 3, 6) of the shock absorber comprise, on the one hand, a compression valve (2) mounted in a sliding and coaxial manner on a first end of a first screw (3), mounted so as to be adjustable in the channel (13) and, on the other hand, elastic means (6) mounted on the first screw (3) and exerting a given pressure on the compression valve (2) when it is mounted on the first screw (3), so that the compression valve (2) tends to move away from the first screw (3), in order to define the second path of oil as a function of oil pressure exerted on the compression valve (2).

4. Adjustment device for a hydraulic shock absorber according to Claim 3, **characterised in that** the low-speed adjustment means (2, 3, 4) of the shock absorber comprise, on the one hand, a second screw (4) comprising a needle valve (41) of a given shape, mounted so as to be adjustable in a coaxial bore-hole (35) of the first screw (3), this bore-hole (35) comprising a first section (353) of given dimensions greater than the dimensions of the second screw (4), a second section (354) of given dimensions less than the dimensions of the second screw (4), these two sections (353, 354) being joined together by a third section (355) of a given shape, complementary to the shape of the needle valve (410) of the second screw (4) and, in addition, means (21, 31) for discharging oil to the reservoir, produced on the compression valve (2) and the first screw (3), in order to define the first path.

5. Adjustment device for a hydraulic shock absorber according to Claim 3, **characterised in that** the elastic means (6) are constituted by Belleville washers mounted in opposition.

6. Adjustment device for a hydraulic shock absorber according to one of Claims 3 to 5, **characterised in that** the compression valve (1) is constituted by a hollow cylinder comprising two crowns (22, 26) between which at least one radial orifice (21) is made, constituting means for discharging oil to the reservoir.

7. Adjustment device for a hydraulic shock absorber according to one of Claims 3 to 6, **characterised in that** the first screw (3) is constituted by a hollow cylinder comprising, at its first end, at least one radial orifice (31) constituting means (31) for discharging oil to the reservoir and, on its outer surface, threading (32) making it possible to adjust the pressure of the elastic means (6) on the compression valve (2).

8. Adjustment device for a hydraulic shock absorber according to one of Claims 4 to 7, **characterised in that** the first (3) and second screw (4) comprise means for identifying the adjustment of the shock absorber comprising, on the one hand, on the outer surface of the second screw (4) at least one notch (44) parallel to its axis of symmetry and, on the other hand, on the first screw (3), a radial slot (33) in which a ball and an elastic means are mounted so that the ball co-operates with a notch (44) of the second screw (4).

9. Adjustment device for a hydraulic shock absorber according to one of Claims 2 to 8 **characterised in that** the shape of the needle valve (410) of the second screw (4) and of the third section (355) of the first screw (3) is constituted by a truncated cone.

10. Adjustment device for a hydraulic shock absorber according to one of Claims 2 to 9 **characterised in that** the first (3) and second screw (4) comprise means (43, 3611) permitting their adjustment by conventional tools such as a spanner and/or a screwdriver.

11. Adjustment device for a hydraulic shock absorber according to the one of Claims 3 to 10, **characterised in that** the outer surface (24) of the compression valve (2) comprises at least one notch (23) parallel to its axis of symmetry.

12. Adjustment device for a hydraulic shock absorber according to one of Claims 1 to 11, **characterised in that** purging means (16) are located on the single-piece head (1) vertically over the area where the reservoir is fixed and emerge, via a cavity (161), in the channel (13).
